(19) Europäisches Patentamt
European Patent Office
Office européen des brevets

(11) Publication number: 0 085 850
A1

(12) # EUROPEAN PATENT APPLICATION

(21) Application number: 83100372.8

(22) Date of filing: 18.01.83

(51) Int. Cl.$^3$: C 08 L 71/04

(30) Priority: 28.01.82 US 343695

(43) Date of publication of application:
17.08.83 Bulletin 83/33

(84) Designated Contracting States:
DE FR GB IT NL

(71) Applicant: GENERAL ELECTRIC COMPANY
1 River Road
Schenectady New York 12305(US)

(72) Inventor: Lee, Gim Fun, Jr.
11 Drawbridge Drive
Albany New York 12203(US)

(74) Representative: Schüler, Horst, Dr. European Patent Attorney et al,
Kaiserstrasse 41
D-6000 Frankfurt/Main 1(DE)

(54) **PPE composition containing impact modifier and melt viscosity reducer.**

(57) Non-plasticized blends of polyphenylene ether resin, an impact modifier, and certain low molecular weight hydrocarbon resins are described. These possess depressed melt viscosities together with high heat distortion temperature and good impact strength. The compositions can be molded into articles of various shapes and sizes.

EP 0 085 850 A1

Croydon Printing Company Ltd.

# PPE COMPOSITION CONTAINING IMPACT MODIFIER AND MELT VISCOSITY REDUCER

10157-8CN-3267

## BACKGROUND OF THE INVENTION

The polyphenylene ether resins are a well-known family of linear thermoplastic engineering resins. A wide variety of these resins and a number of methods for their preparation are disclosed in Hay, U.S. Patent Nos. 3,306,874 and 3,306,875, as well as in Stamatoff, U.S. Patent Nos. 3,257,357 and 3,257,358.

The polyphenylene ether resins are admixable with other polymers as defined by Cizek, U.S. 3,383,435, and with thermoplastic elastomers conventionally used as auxiliary or modifying resins. Many of these are employed to improve the impact resistance of articles molded from the mixtures; compositions of this type are disclosed in Cizek, mentioned above, as well as in Cooper, et al., U.S. Patent Nos. 3,974,235; 4,101,504; 4,101,505; and 4,172,929, and elsewhere.

Many such compositions are normally flammable. The term "normally flammable" as used herein is intended to mean not meeting the V-O and V-1 requirements of the Underwriters' Laboratories Bulletin No. 94 test. It is known that certain agents, e.g., aromatic phosphates, can be added to impart flame retardancy (self-extinguishing) behavior and to also function as plasticizers for the

composition. The resulting compositions often exhibit a combination of high heat distortion temperature (the temperature at which a molded sample begins to deform), good resistance to breakage or fracture upon impact, and good fire resistance. There have, however, been some difficulties encountered in processing because of the high viscosity of the resins in the molten state. The high melt viscosity lowers the rate at which the resins can be molded in injection molding machines and increases the power required to maintain a given rate of production from extrusion machines. Higher processing temperatures can be used, but this can cause depolymerization, oxidation or other degradation of the resin.

It has been proposed that the addition of low molecular weight hydrocarbon resins to certain polyphenylene ether resin blends can enhance processing by reducing the molding temperature and melt viscosity. Compositions of this type are disclosed in U.S. Patent No. 4,189,411 to Haaf, and U.K. Patent No. 1,344,729.

## INTRODUCTION TO THE INVENTION

The discovery has now been made that when certain low molecular weight hydrocarbon resins are incorporated in unplasticized blends of polyphenylene ether resin and an impact modifier, the resultant composites are characterized by lower melt viscosity which facilitates molding as well as by high heat distortion temperature and good impact strength.

Preferably, the low molecular weight hydrocarbon resin is selected from among coumarone-indene resins, cyclopentadiene-styrene resins, aromatic petroleum resins, cyclopentadiene-indene resins, phenol-coumarone-indene resins and alpha-methyl styrene resins. Commercially available forms are illustrated in the examples.

DESCRIPTION OF THE INVENTION

The polyphenylene oxide resins useful in accordance with the present kinds of compositions are, as previously indicated, individually well known. There are, however, various preferred compositions components. These are primarily ones commonly having applications for which high impact strength is particularly desirable.

The preferred polyphenylene ethers are homo- and copolymers of the formula:

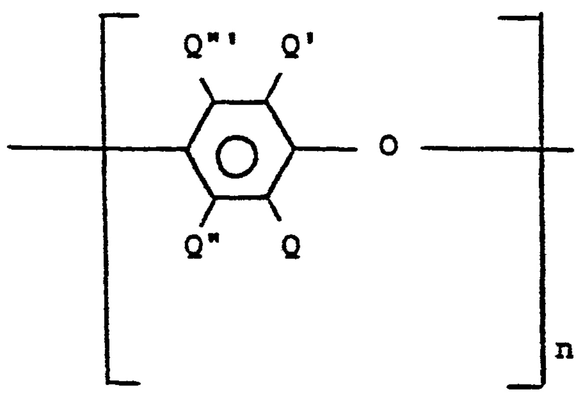

wherein Q, Q', Q" and Q"', are independently selected from the group consisting of hydrogen, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atoms and the phenol nucleus, and Q', Q" and Q"' in addition may be halogen with the proviso that Q and Q' are preferably free of a tertiary carbon atom; and n represents the total number of monomer residues and is an integer of at least 50.

Especially preferred is poly(2,6-dimethyl-1,4-phenylene ether).

These can be prepared by following the teachings of the aforementioned patents.

The polyphenylene ether resin is preferably in admixture with one or more polymeric impact modifiers. The impact modifier can be styrene homopolymer in admixture or otherwise modified with an elastomeric material such as a natural or synthetic rubber, or a styrene containing elastomeric copolymer or terpolymer.

By way of illustration, the impact modifier may be a homopolymer such as polystyrene, polychlorostyrene, poly(alpha-methyl styrene), or poly(para-methyl styrene) which has been modified by natural or synthetic rubber, for example, polybutadiene, polyisoprene, butyl rubber, EPDM rubber, natural rubber, polysulfide rubbers, polyurethane rubbers, etc., elastomeric styrene copolymers such as styrene-butadiene copolymers, styrene-acrylonitrile-butadiene terpolymers (ABS), block copolymers of styrene and a diene in their various forms, for example, A-B, A-B-A, A-B-AB, A-B-A-B-A, etc., random or radial teleblock copolymers of these same materials, as well as hydrogenated forms of the linear, random and radial copolymers in which the aliphatic unsaturation, e.g., of the "B" (diene) block has been reduced; and admixtures of any of the above mentioned styrene homopolymers with any of the above mentioned elastomeric styrene co- and terpolymers.

Blends of the polyphenylene ether resin and impact modifier can contain these materials in virtually any desired proportion, e.g., from 20:1 to 1:2 parts by weight.

Only a small amount of the low molecular weight hydrocarbon is necessary to achieve the benefits of the invention. Amounts of at least about 0.1 percent by weight, and generally from about 1.0 to 25.0 percent by weight, based on the total weight of resins,

understood, however, that the amount of this ingredient can vary widely both within and without this range, depending on particular requirements.

The molding compositions of this invention can and advantageously do contain one or more of the supplementary non-resinous agents which have heretofore been customarily present in polyphenylene ether resin molding compositions to improve certain other physical and chemical properties of the moldings. The agents include antioxidants, strengthening fibers (for example, glass fibers and graphite whiskers), mineral fillers, abrasion resistant components, dyes, pigments and so forth. Many of such agents are disclosed in U.S. Patent No. 4,172,929 to Cooper et al. These are normally present in minor but effective amounts of between 1% and 50% by weight.

The compositions are prepared in the conventional manner by blending the ingredients to form a pre-mix, extruding the pre-mix on a single or twin-screw extruder, cooling and chopping the extrudate to molding size pellets and injection molding. Alternatively, a homogeneous melt of the ingredients can be formed which is cooled and cut or ground to size, then directly molded or first extruded and then molded.

The following examples illustrate the invention. These are intended as preferred embodiments only and are not meant to be a limitation on the scope of the invention. All proportions are stated on a parts by weight basis.

## EXAMPLES

Compositions were prepared by blending 80 parts of poly(2,6-dimethyl-1,4-phenylene ether) resin (PPO, General Electric Co.), 10 parts of polystyrene-polybutadiene-polystyrene (Shell's KG 1651, having a hydrogenated midblock), 20 parts of the low molecular weight hydrocarbon resins noted below, 0.15 part of zinc sulfide and 0.15 part of zinc oxide. The blend pre-mixes were extruded through a 28 mm twin screw Werner-Pfleiderer machine at 580 °F., then molded into test bars at an injection temperature of 575 °F. ( 270 °F. mold temperature). The results are shown in the Table.

TABLE

| Sample | Additive (low m.w. hydrocarbon) | T.Y. (psi) | T.S. (psi) | Tens.E. (%) | Izod imp. (ft.lb./in.) | Gard.imp. (in./lbs.) | HDT °F. |
|---|---|---|---|---|---|---|---|
| 1 | Cumar LX509 | 11,630 | 9,270 | 15 | 4.1 | 20 | 310 |
| 2 | Cumar W-2.5 | 11,800 | 11,800 | 13 | 4.1 | 30 | 297 |
| 3 | Neville LX-685-180 | 10,530 | 8,400 | 26 | 4.0 | 70 | 332 |
| 4 | Nevchem 140 | 11,130 | 8,830 | 27 | 3.9 | 170 | 324 |

Cumar LX509 and W-2.5 are coumarone-indene resins from Neville Chemical Co.; Neville LX685-180 is a cyclpentadiene-styrene resin from Neville; Nevchem 140 is an aromatic petroleum resin from Neville.

The above-mentioned patents and/or publications are incorporated herein by reference. Obviously, other modifications and variations of the present invention are possible, in light of the above disclosure. For instance, instead of poly(2,6-dimethyl-1,4-phenylene ether), copolymers such as poly(2,6-dimethyl-co-2,3,6-trimethyl-1,4-phenylene ether) can be substituted. The relative proportions of the ingredients can be varied. It is, therefore, to be understood that changes may be made in the particular embodiments shown which are within the full intended scope of the invention as defined in the appended claims.

CLAIMS:

1. An unplasticized thermoplastic composition comprising an admixture of:

(a) a blend of a polyphenylene ether resin and an impact modifier; and

(b) an effective amount of a low molecular weight hydrocarbon resin.

2. A composition according to Claim 1, comprising at least 0.1 percent by weight of the low molecular weight hydrocarbon resin.

3. A composition according to Claim 1, comprising from about 1.0 to 25.0 percent by weight of the low molecular weight hydrocarbon resin.

4. A composition according to Claim 1, in which the low molecular weight hydrocarbon is selected from among coumarone-indene resins, cyclopentadiene-styrene resins, aromatic petroleum resins, cyclopentadiene-indene resins, phenol-coumarone-indene resins and alpha-methyl styrene resins, and mixtures of any of the foregoing.

5. A composition according to Claim 1, in whcih the polyphenylene ether resin is a homo- or copolymer having the formula:

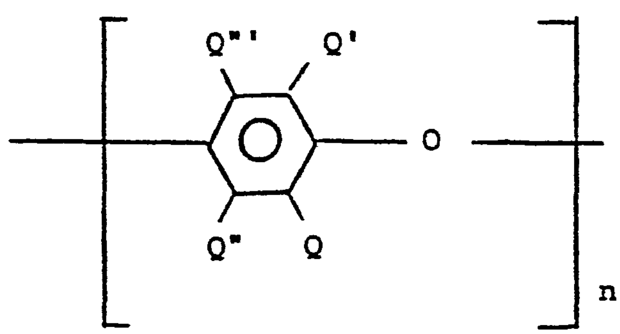

wherein Q, Q', Q" and Q"', are independently selected from the group consisting of hydrogen, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atoms and the phenol nucleus, and Q', Q" and Q"' in addition may be halogen with the proviso that Q and Q' are preferably free of a tertiary carbon atom; and n represents the total number of monomer residues and is an integer of at least 50.

6. A composition according to Claim 1, in which the polyphenylene ether resin is poly(2,6-dimethyl-1,4-phenylene ether).

7. A composition according to claim 1, in which impact modifier is a block copolymer of styrene and butadiene.

8. A composition according to Claim 7, in which the butadiene block has been hydrogenated.

9. A composition according to Claim 1, which comprises polyphenylene ether and the impact modifier in a weight ratio of from 20:1 to 1:2.

10. A composition according to Claim 1, which includes a non-resinous additive selected from among antioxidants, pigments, dyes, mineral fillers and strengthening fibers.

European Patent Office

# EUROPEAN SEARCH REPORT

0085850
Application number

EP 83 10 0372

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 043 080 (GENERAL ELECTRIC)<br>* Claims; page 2, line 64 - page 3, line 13 *<br>--- | 1 | C 08 L 71/04 |
| D,Y | GB-A-1 344 729 (UNIROYAL)<br>* Claims; page 1, lines 34-81; examples *<br>--- | 1 | |
| A | DE-A-2 504 503 (GENERAL ELECTRIC)<br>* Claims; page 3, lines 1-13 *<br>--- | 1 | |
| A | GB-A-2 060 656 (GENERAL ELECTRIC)<br>* Claims *<br>----- | 1 | |
| | | | TECHNICAL FIELDS SEARCHED (Int. Cl. ³) |
| | | | C 08 L |

The present search report has been drawn up for all claims

| Place of search | Date of completion of the search | Examiner |
|---|---|---|
| THE HAGUE | 09-05-1983 | MALHERBE Y.J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82